(19) Europäisches Patentamt
European Patent Office
Office européen des brevets

(11) Veröffentlichungsnummer: **0 539 406 B1**

(12) # EUROPÄISCHE PATENTSCHRIFT

(45) Veröffentlichungstag der Patentschrift: **02.11.94**

(51) Int. Cl.$^{5}$: **C08G 18/40**, C08G 18/60, C08G 18/65, C09J 175/04, //(C09J175/04,177:00)

(21) Anmeldenummer: **91912366.1**

(22) Anmeldetag: **10.07.91**

(86) Internationale Anmeldenummer: **PCT/EP91/01284**

(87) Internationale Veröffentlichungsnummer: **WO 92/01725 (06.02.92 92/04)**

(54) **THIXOTROPE POLYURETHANSYSTEME.**

(30) Priorität: **19.07.90 DE 4023005**

(43) Veröffentlichungstag der Anmeldung: **05.05.93 Patentblatt 93/18**

(45) Bekanntmachung des Hinweises auf die Patenterteilung: **02.11.94 Patentblatt 94/44**

(84) Benannte Vertragsstaaten: **AT BE CH DE DK ES FR GB GR IT LI LU NL SE**

(56) Entgegenhaltungen:
**EP-A- 0 248 254**
**DE-A- 2 351 186**
**FR-A- 2 282 437**

(73) Patentinhaber: **Henkel Kommanditgesellschaft auf Aktien**

**D-40191 Düsseldorf (DE)**

(72) Erfinder: **STARTELET, Jean-François**
**8, allée des Jardins du Roi**
**F-51380 Verzy (FR)**
Erfinder: **SANCH, François-René**
**24, rue Pasteur**
**F-51000 Châlons-sur-Marne (FR)**
Erfinder: **AGGIAS, Zissis**
**Hügelstra e 50 D**
**D-4000 Düsseldorf (DE)**

EP 0 539 406 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft thixotrope Polyurethansysteme, ihre Herstellung und ihre Verwendung.

Bei vielseitigen Verwendungen von Polyurethansystemen, insbesondere von Klebemitteln, ist es erwünscht, daß die Systeme strukturviskoses bis thixotropes Verhalten zeigen, so daß sich nach dem Auftrag schnell eine hohe Viskosität einstellt und das Verlaufen des Auftrags verhindert wird.

Die Erfindung betrifft insbesondere spezielle Klebstoff-Zwei-Komponentensysteme vom Polyurethantyp, die insbesondere im Filterbau, beim Einsetzen von Scheiben in Fensterprofile, insbesondere bei Mehrfachverglasung, und für Herstellung von Sandwich-Bauteilen, z.B. LKW-Aufbauten, einsetzbar sind.

Insbesondere auf diesen Einsatzgebieten ist es wünschenswert, daß das Klebstoffsystem nicht fließfähig ist, weil häufig über Kopf oder in der Senkrechten gearbeitet werden muß. Hierzu wurden bisher pastöse gefüllte Klebstoffe verwendet, die zusätzlich anorganische und/oder organische Verdickungsmittel enthalten können, wobei bei den Zwei-Komponentensystemen meistens die Polyolkomponente gefüllt ist, insbesondere mit Füllstoffen zur physikalischen Thixotropierung, wobei zumeist anorganische Stoffe wie Schichtsilikate verwendet werden.

Wenn auch derartige pastöse, physikalisch thixotropierte Klebstoffsysteme nicht fließen, ist dieses zwar bei der eigentlichen Montage, jedoch nicht bei der Aufbringung des Klebstoffes erwünscht. Zum einen wird hierdurch die maschinelle Aufbringbarkeit erschwert oder unmöglich gemacht, und zum anderen verlaufen diese Klebstoffe auf Substratoberfläche nicht, so daß es nicht zu der benötigten ausreichenden Benetzung kommt, es sei denn, es werden zusätzliche Maßnahmen ergriffen. Darüber hinaus ist die Vermischung einer solchen gefüllten Polyolkomponenten mit der Isocyanatkomponente unmittelbar vor Aufbringung des Klebstoffs wesentlich erschwert.

Aufgabe der Erfindung ist es, zweikomponentige thixotrope Polyurethansysteme zur Verfügung zu stellen, die insbesondere für die angegebenen Verwendungen geeignet sind und die geschilderten Nachteile nicht aufweisen, sondern nach Mischung der Komponenten noch für einige Sekunden die zur Aufbringung nötige relativ niedrige Viskosität besitzen, und bei denen sich die Thixotropie erst nach diesem Zeitraum einstellt, wobei im übrigen die für ein entsprechendes Klebstoffsystem üblichen Anforderungen erfüllt sein sollen.

Überraschenderweise wurde nun gefunden, daß derartige zweikomponentige Polyurethansysteme erhältlich sind, wenn die Polyolkomponente eine Mischung von Polyamidaminen mit einem niedermolekularen mehrfunktionellen Amin enthält, wobei es sich um eine Verbindung mit im Mittel etwa 2 Aminogruppen pro Molekül oder um bei Raumtemperatur flüssige Vertreter der homologen Reihe der Alkanolamine handelt. Weitere vorteilhafte Ausgestaltungen der Erfindung, die auch die Herstellung und Verwendung der erfindungsgemäßen thixotropen Polyurethansysteme betreffen, ergeben sich aus den folgenden Ansprüchen 2 bis 16.

Erfindungsgemäß wurde gefunden, daß die Mischung aus Polyol- und Isocyanatkomponente gemäß Erfindung noch für etwa 4 bis etwa 60 Sekunden eine für die Applikation ausreichend niedrige Viskosität aufweist, so daß

1) das Substrat gut benetzt wird, und
2) der Klebstoff zu einem gewissen Grad verläuft;

dann tritt überraschend wirkungsvoll der Thixotropieeffekt ein, so daß das System praktisch keinerlei Fließverhalten aufzeigt, so daß die Klebemasse auch an senkrechten Substratflächen ohne Verlaufen oder Tropfen verbleibt. Dieser Thixotropieeffekt ist unabhängig von der eigentlichen Topfzeit der erfindungsgemäßen Klebemittelzusammensetzung, die in an sich bekannter Weise auf Zeiten von 1 Minute bis etwa 5 Stunden eingestellt werden kann.

Die Erfindung ist gleichermaßen anwendbar auf zweikomponentige Polyurethansysteme in Form von Schäumen, Elastomeren oder Dichtungsmassen.

Gleichzeitig wurde eine Lagerstabilität der erfindungsgemäß veränderten Polyolkomponenten von einem Jahr und länger beobachtet.

Schließlich wurde gefunden, daß erfindungsgemäß Verklebungen erzielbar sind, die bezüglich der Zugscherfestigkeit überraschenderweise um etwa 30 % höher als vergleichbare Klebsysteme liegen, die nicht erfindungsgemäß chemisch thixotropiert sind.

Gleichzeitig wurde gefunden, daß sich weder eine ausreichende Lagerstabilität noch, nach dem Vermischen mit der Isocyanatkomponente, ausreichende Thixotropierung einstellt, wenn der Polyolkomponente nur Polyamidamin oder nur niedermolekulares mehrfunktionelles Amin beigefügt wird.

Zu besonders geeigneten, der Polyolkomponenten zuzusetzenden Polyamidaminen zählen solche, die durch Umsetzung von oligomerisierten Fettsäuren wie Tricarbonsäuren mit Überschuß von mehrwertigen Aminen erhältlich sind. Als ganz besonders geeignet hat sich ein weichgemachtes Polyamidaminharz auf

der Basis von oligomerisierten ungesättigten Fettsäuren gezeigt, dessen mittleres Molekulargewicht ca. 1.200 beträgt, und das der mittleren Zusammensetzung $C_{72}H_{150}N_9O_3$ entspricht; die Viskosität beträgt bei 25 °C etwa 3000 Pa•s

Diese Harze werden durch Kondensation oder Amidierung von (a) Oligocarbonsäuren aus der Oligomerisation von ungesättigten Fettsäuren mit vorzugsweise mindestens 50 Gew.% Trimergehalt, bevorzugt einer Zusammensetzung von 0 - 2 % monomere Fettsäuren, 10 - 50 % dimere Fettsäuren und 50 - 90 % trimere Fettsäuren, mit (b) Überschuß eines heterocyklischen Amins der allgemeinen Formel

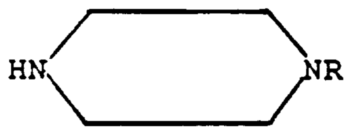

erhalten, wobei R eine Alkylaminogruppe oder H, -R'$NH_2$ ist, wobei R' eine gesättigte aliphatische Kohlenwasserstoffkette, bevorzugt eine -$C_2H_4$- Gruppe ist.

Geeignete mehrfunktionelle Amine sind solche, die im Mittel etwa 2 Aminogruppen pro Molekül aufweisen. Hierzu zählen cykloaliphatische Diamine und Diamine auf Basis Polyäther wie Polyoxypropylen-alpha-omega-diamin wie auch flüssige aromatische Diamine.

Zu geeigneten aromatischen Diaminen zählen 2,4-Diaminomesitylen, 1,3,5-Triethyl-2,4-diaminobenzol, 1,3,5,-Triisopropyl-2,4-diaminobenzol, 4,6-Dimethyl-2-ethyl-1,3-diaminobenzol, 3,5,3',5'-Tetraethyl-4,4'-diaminodiphenylmethan, 3,5,3',5'-Tetraisopropyl-4,4'-diaminodiphenylmethan, 3,5-Diethyl-3',5'-diisopropyl-4,4'-diaminodiphenylmethan, 1-t-Butyl-3,5-dimethyl-2,4-diaminobenzol, 1-t-Butyl-3,5-dimethyl-2,6-diaminobenzol oder deren technische Gemische, und gegebenenfalls deren Isomere auch in Mischung. Bevorzugt sind trialkylsubstituierte Diaminobenzole, ggfs. in ihren isomeren Mischungen, bei denen die Alkylgruppen vorzugsweise eine Methyl- und 2 Ethylgruppen sind, beispielsweise 1-Methyl-3,5-diethyl-2,4-diaminobenzol und 1-Methyl-3,5-diethyl-2,6-diaminobenzol.

Die vorstehend genannten Amino-Verbindungen können auch als flüssige Zubereitungen zusammen mit anderen Komponenten eingesetzt werden. Derartige Komponenten können beispielsweise Ester und/oder oligomerisierte bzw. polymerisierte Ester sein. Diese können gegebenenfalls auch NCO-reaktive Hydroxylgruppen enthalten. Beispielhaft seien für derartige Ester z.B. Carbonate bzw. Polycarbonate, insbesondere Propylen-1,2-carbonat, genannt. Die erfindungsgemäß geeigneten Aminzubereitungen bestehen üblicherweise zu einem Drittel bis zur Hälfte aus derartigen Estern. Solche Zubereitungen sind auch kommerziell erhältlich z.B. Baytec 110 von der Firma Bayer.

Es lassen sich aber auch gute Ergebnisse mit Tetramethylethylendiamin erzielen, wie auch mit Vertretern der homologen Reihe der Alkanolamine, soweit die genannten Verbindungen bei Raumtemperatur flüssig sind.

Zu erfindungsgemäß geeigneten Polyolen zählen die an sich bekannten Polyole für Zwei-Komponenten-Polyurethansysteme, wie sie beispielsweise in DE 38 27 378 bzw. EP 354 471 beschrieben werden, wobei bevorzugte Polyolkomponenten in den nachfolgenden Beispielen verwendet werden.

Bevorzugt sind hier Polyester, Polyacetale, Polyether, Polythioether, Polyamide und/oder Polyesteramide, die jeweils im Mittel 2 bis 4 Hydroxylgruppen aufweisen.

Als Polyether seien z.B. die Polymerisationsprodukte des Ethylenoxids, Propylenoxids, Butylenoxids sowie ihre Misch- oder Pfropf-polymerisationsprodukte sowie die durch Kondensation von mehrwertigen Alkoholen oder Mischungen derselben und die durch Alkoxylierung von mehrwertigen Alkoholen, Aminen, Polyaminen und Aminoalkoholen gewonnenen Polyether genannt. Auch isotaktisches Polypropylenglykol kann Verwendung finden.

Als Polyacetale kommen z. B. die aus Glykolen wie Diethylenglykol, Triethylenglykol, Hexandiol und Formaldehyd herstellbaren Verbindungen in Frage. Auch durch Polymerisation cyclischer Acetale lassen sich geeignete Polyacetale herstellen.

Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten um Polythioether, Polythiomischether, Polythioetherester, Polythioetheresteramide. Derartige Polyhydroxylverbindungen können auch in alkylierter Form bzw. in Mischung mit Alkylierungsmitteln angewandt werden.

Zu den Polyestern, Polyesteramiden und Polyamiden zählen die aus mehrwertigen gesättigten und ungesättigten Carbonsäuren bzw. deren Anhydriden und mehrwertigen gesättigten und ungesättigten Alkoholen, Aminoalkoholen, Diaminen, Polyaminen und ihren Mischungen gewonnenen, überwiegend linearen Kondensate, sowie z.B. Polyterephthalate oder Polycarbonate. Auch Polyester aus Lactonen, z. B. Caprolacton oder aus Hydroxycarbonsäuren sind verwendbar. Die Polyester können Hydroxyl- oder Carboxylendgruppen aufweisen. Zu ihrem Aufbau können als Alkoholkomponente auch höhermolekulare Polymerisate oder Kondensate, wie z.B. Polyether, Polyacetale, Polyoxymethylene (mit)verwendet werden.

Auch bereits Urethan- oder Harnstoffgruppen enthaltende Polyhydroxylverbindungen sowie gegebenenfalls modifizierte natürliche Polyole wie Rizinusöl sind verwendbar. Grundsätzlich kommen auch Polyhydroxylverbindungen, welche basische Stickstoffatome aufweisen, in Frage, z. B. polyalkoxylierte primäre Amine oder Polyester bzw. Polythioether, welche Alkyl-diethanolamin einkondensiert enthalten. Weiterhin eingesetzt werden können Polyole, die durch vollständige oder teilweise Ringöffnung epoxidierter Triglyceride mit primären oder sekundären Hydroxylverbindungen erzeugt werden können, beispielsweise das Umsetzungsprodukt von epoxidiertem Sojaöl mit Methanol.

In die Polyolkomponente können auch Feststoffe eingearbeitet sein, die nicht als physikalische Thixotropierungsmittel wirken, sondern andere Funktionen ausüben, z.B. Trocknungsmittel, Pigmente, Streckmittel, Dispersionshilfsmittel. Hierzu gehören beispielsweise Kreide, Schwerspat, Talk und Magnesium/Calciumcarbonatdoppelsalze.

Als Isocyanatkomponente sind solche geeignet, die ebenfalls zur Verwendung in Zwei-Komponenten-Polyurethansystemen an sich bekannt sind und beispielsweise in DE 38 27 378 beschrieben werden. So sind praktisch alle flüssigen mehrfunktionellen Isocyanate, insbesondere Roh-MDI (technisch hergestelltes 4,4'-Diphenylmethandiisocyanat) mit einer Funktionalität von 2,4 bis 2,7 sowie Toluylendiisocyanat (TDI), Tetramethylxyloldiisocyanat (TMXDI) und/oder Isophorondiisocyanat (IDPI) geeignet.

Das Verhältnis von niedermolekularen mehrfunktionellen Aminen zu Polyamidamin beträgt von etwa 10:1 bis 2:3 Gewichtsteile. Wenn auch dieses Verhältnis nicht überaus kritisch zu sein scheint, werden bei den genannten Methyl-diethyl-diaminobenzolenGewichtsverhältnisse von etwa 2:1 bis 4:1 bevorzugt.

Der Anteil der Kombination von Aminen an der Polyolkomponente beträgt 1 bis 10 Gew.%, vorzugsweise 2 - 6 Gew.%, insbesondere 3 - 5 Gew.%.

Vorzugsweise werden die mehrfunktionellen Amine und das Polyamidamin der Polyolkomponente vor der Umsetzung mit der Isocyanatkomponente zugegeben. Üblicherweise wird die Polyolkomponente samt den erfindungsgemäßen Zusätzen unmittelbar vor der Applikation mit der Isocyanatkomponente innig vermengt.

Die erfindungsgemäß geeignete Polyolkomponente enthält:

15 bis 100 Gew.-% Polyol
0 bis 85 Gew.-% Füllstoff
0 bis 5 Gew.-% Trockenmittel wie Zeolith
0 bis 2 Gew.-% Verdickungsmittel (auch zur Verhinderung der Sedimentation
0 bis 2 Gew.-% sonstige Hilfstoffe wie z.B. Farbstoffe oder Katalysatoren
1 bis 10 Gew.-%, insbesondere 3 bis 5 Gew.-% erfindungsgemäßes Thixotropiermittel

Das erfindungsgemäß geeignete Verhältnis von Polyolkomponente zu Isocyanatkomponente läßt sich am besten durch das stöchiometrische Verhältnis von NCO-reaktiven zu NCO-Gruppen angeben. Dieses Verhältnis liegt im Bereich von 3 : 2 bis 2 : 3, insbesondere im Bereich von 1 : 1 bis 3 : 4. Optimal ist ein Überschuß an NCO-Gruppen von etwa 10 bis 30 %.

Die Erfindung wird anhand der folgenden Beispiele näher erläutert. (Alle % Angaben verstehen sich als Gew.%; GT = Gewichtsteile)

Beispiel 1

23 % Rizinusöl
23 % Polyethertriol; propoxyliertes Glycerin mit einem Molekulargewicht von etwa 450.
4 % Zeolith-Paste (wie in Beispiel 1)
0,2 % Schichtsilikat; wirkt in der hier zugefügten geringen Menge nicht als Thixotropiermittel, sondern als Dispersionshilfsstoff
2,6 % Baytec 110
0,9 % Polyamidaminharz auf der Basis von oligomerisierten ungesättigten Fettsäuren (s. S. 4, oben)
0,02 % Dibutyl-zinn-dilaurat
46,28 % Kreide

Das Mischungsverhältnis dieser erfindungsgemäßen Polyurethankomponenten mit Roh-MDI betrug 3:1 Gew.-Teile.

Der Thixotropieeffekt tritt bei 25 ° C nach 12 Sekunden ein. Die Topfzeit bei 20 ° C beträgt 6 Minuten.

Die Zugscherfestigkeit einer Aluminium/Aluminiumverklebung nach DIN 53283 wurde mit 12 - 15 N/mm$^2$

gemessen.

Beispiel 2

41,7 % Polyethertriol; propoxyliertes Glycerin mit einem Molekulargewicht von etwa 450.
42,4 % Rizinusöl
5,75 % Zeolith-Paste (wie in Beispiel 1)
0,025 % Dibutyl-zinn-dilaurat
0,3 % Schichtsilikat; wirkt in der hier zugefügten geringen Menge nicht als Thixotropiermittel, sondern als Dispersionshilfsstoff
4 % Titandioxid
4,5 % Baytec 110
1,5 % Polyamidaminharz auf der Basis von oligomerisierten ungesättigten Fettsäuren (wie Beispiel 1)
Das Mischungsverhältnis dieser erfindungsgemäßen Polyurethankomponenten mit Roh-MDI betrug 100:62,5 Gew.-Teile.
Der Thixotropieeffekt tritt bei 25 °C nach 12 Sekunden ein. Die Topfzeit bei 20 °C beträgt 3 Minuten.
Die Zugscherfestigkeit einer Aluminium/Aluminiumverklebung nach DIN 53283 wurde mit 10 - 15 N/mm$^2$ gemessen.

Beispiel 3

Die folgende Rezeptur hat sich als besonders geeignet bei der Herstellung von doppelverglasten Fenstern, d.h. zur Verklebung der Scheiben mit den Fensterprofilen, erwiesen:
48 Gew.-Teile Rizinusöl
4 Gew.-Teile Trockenmittel (Zeolithpaste 50 %ig) (wie Beispiel 1)
48 Gew.-Teile Füllstoff (Kreide)
0,5 Gew.-Teile Polyamidamin (Polyamidaminharz auf der Basis von oligomerisierten ungesättigten Fettsäuren) (wie Beispiel 1)
4 Gew.-Teile Baytec 110
0,13 Gew.-Teile Katalysator (Dibutyl-zinn-dilaurat) (DBTL)

Die obengenannte Mischung bildet die Polyolkomponente und wird zur Applikation in einem Verhältnis von 4:1 mit Roh-MDI gemischt. Thioxotropie tritt nach ca. 15 Sekunden auf, die Topfzeit beträgt 30 Sekunden und die Abbindezeit etwa 1 bis 1,5 Minuten.

Darüber hinaus wurden eine Reihe von Polyurethansystemen mit unterschiedlichen Mengen der erfindungsgemäßen Kombination aus mehrfunktionellen Aminen und Polyamidamin bezüglich ihres Fließverhaltens nach Aufbringen auf eine horizontale Fläche als Bewertungsgröße für die Thixotropie dieser Systeme untersucht. Die Versuchsergebnisse sind in den nachfolgenden Tabellen wiedergegeben.

Das untersuchte Grundprodukt gemäß den Tabellen 2 und 5 bestand aus Rizinusöl/Polyäthertriol im Mischungsverhältnis 43 Gew.%/42 Gew.%, wobei ein Polyethertriol (propoxyliertes Glycerin, mittl. MG ca. 450) gemäß Beispiel 2 verwendet wurde.

In der folgenden Tabelle 1 sind Eigenschaften von Polyurethansystemen wiedergegeben, bei denen lediglich der Gewichtsanteil Polyamidaminharz variiert wurde:

Tabelle 1

| | | | | | | | | |
|---|---|---|---|---|---|---|---|---|
| Gew.-% Baytec 110 | 2,25 | 2,25 | 2,25 | 2,25 | 2,25 | 2,25 | 2,25 | 2,25 |
| Gew.-% Polyamidaminharz | 0,5 | 1 | 1,5 | 2 | 2,5 | 3 | 3,5 | 4 |
| Gew.-% DBTL *** | 0,01 | 0,01 | 0,01 | 0,01 | 0,01 | 0,01 | 0,01 | 0,01 |
| Strukturviskosität nach (sec) | 20-25 | 20 | 15-20 | 15-20 | 15-20 | 13-15 | 10-15 | 10 |
| Konsistenz | Gel ohne Konsi-stenz | Gel ohne Konsi-stenz | konsisten-tes Gel ohne Klumpen | Gel ohne Klumpen | Gel ohne Klumpen | Gel mit Klumpen | Klumpen | Klumpen |
| Neigung auf einer verti-kalen Fläche abzulaufen | Ja | Ja | Ja | Ja | Ja | Ja | Ja | Ja |
| Ablaufstrecke | >50 | >50 | >30 | 15 | 10 | 5 | 2 | 2 |

Polyurethanschichtdicke: 5mm

Grundmaterial: Rizinusöl/Polyethertriol (aus der Polypropoxylierung von Glycerin), mittleres MG~450: 43/42 Gewichtsteile

Grundmaterial / Härter (Roh-MDI) = 100 GT / 60 GT

*** Dibutylzinn-dilaurat

Im weiteren wurde untersucht, in welcher Weise der Zusatz von Polyamidaminharz auf der Basis von oligomerisierten ungesattigten Fettsäuren unter Fortlassen aromatischer Diamine das rheologische Verhalten eines Polyurethansystems beeinflußt.

Tabelle 2

| % Polyamidamin auf der Basis von oligomerisierten ungesättigten Fettsäuren (s.S. 4) | aromatisches Diamin | Fließverhalten |
|---|---|---|
| 1,5 % | 0 % | Flüssiges Produkt |
| 3 % | 0 % | Gel, von einer vertikalen Fläche, jedoch stark ablaufend |
| 4 % | 0 % | Gelbildung, von einer vertikalen Fläche jedoch ablaufend |
| 6 % | 0 % | Gel, geringes Ablaufen von einer vertikalen Fläche; Klumpenbildung |

Auftragsschichtdicke: 5 mm alle Angaben in Gew.%
Grundmaterial / Härter (Roh-MDI) = 100 GT / 60 GT

Es wurden ebenfalls Versuche durchgeführt, bei der kein Polyamidaminharz auf der Basis von oligomerisierten ungesättigten Fettsäuren, sondern wechselnde Mengen von Baytec 110 zugesetzt wurden. Die Ergebnisse ergeben sich aus Tab. 3. Sie entsprechen qualitativ den Ergebnissen der Versuche, bei denen nur Polyamidaminharz auf der Basis von oligomerisierten ungesättigten Fettsäuren, jedoch kein aromatisches Diamin zugesetzt wurde.

Mit den gleichen Grundmaterialien wurden bei wechselnden Mengen an Polyamidaminharz auf der Basis von oligomerisierten ungesättigten Fettsäuren bei gleichbleibendem Gehalt an Baytec 110 mit dem gleichen Ausgangsprodukt gemäß den beiden vorhergehenden Untersuchungen Versuche durchgeführt; die Werte bezüglich des Ablaufverhaltens von einer vertikalen Fläche und bezüglich des Thixotropieeffektes werden in Tabelle 4 wiedergegeben.

Desweiteren wurde das Ablaufverhalten für Produkte mit 3 verschiedenen Konzentrationen an aromatischen Diaminen bei unterschiedlichen Konzentrationen an Polyamidamin vermessen (Tabelle 5).

Tabelle 3

Test auf Auftreten der Strukturviskosität (Vergleichsbeispiel)

Grundmaterial

| | |
|---|---|
| Rizinusöl | 50 Gew.-% |
| Füllstoffe | 50 Gew.-% |
| DBTL | 0,13 Gew.-% |
| Baytec 110 | wechselnde Mengen |
| Polyamidamin | 0 Gew.-% |

Grundmaterial / Härter (Roh-MDI) = 100 Gew.-Teile / 20 Gew.-Teile

| Baytec 110 | strukturviskos nach |
|---|---|
| 3 Gew.-% | 15 s |
| 3,5 Gew.-% | 12 s |
| 4,0 Gew.-% | 9 s |
| 4,5 Gew.-% | 8 s |
| 5,0 Gew.-% | 6 s |
| 6,0 Gew.-% | 5 s |

Tabelle 4

Test auf Strukturviskosität und Ablaufverhalten

Grundmaterial:

| | | |
|---|---|---|
| Rizinusöl | 50 | Gew.-% |
| Füllstoffe | 50 | Gew.-% |
| DBTL | 0,13 | Gew.-% |
| Baytec 110 | 4,5 | Gew.-% |

Polyamidamin (s. S.4) wechselnde Mengen

Grundmaterial / Härter (Roh-MDI) = 100 Gew.-Teile / 20 Gew.-Teile

| Polyamidamin | strukturviskos nach | Ablaufstrecke * an einer vertikalen Fläche |
|---|---|---|
| 0 Gew.-% | 8 s | 3 cm |
| 0,1 Gew.-% | 8 s | 1 cm |
| 0,2 Gew.-% | 7 s | 0,5 cm |
| 0,3 Gew.-% | 6 s | 0,2 cm |
| 0,5 Gew.-% | 5 s | 0 cm |
| 0,75 Gew.-% | 5 s | 0 cm |

* Schichtdicke 5 mm

Tabelle 5

Test auf Ablaufverhalten an einer vertikalen Fläche

| Gew.-% Polyamidamin s. S. 4 \ Gew.-% Baytec 110 | Ablaufstrecke in cm 3,0 | 4,0 | 4,5 |
|---|---|---|---|
| 0 | n.b. | 25 | 15 |
| 0,25 | n.b. | | 6 |
| 0,5 | n.b. | | 2 |
| 0,75 | n.b. | | 1,5 |
| 1,0 | n.b. | 5 | |
| 1,2 | n.b. | | 1 |
| 1,5 | n.b. | 3 | 0,2 |
| 2,0 | 25 | 1 | 0 |
| 2,5 | 12 | 0,5 | |
| 2,75* | | 0 | |
| 3,0* | 5 | | |
| 3,5* | 2 | | |

* Klumpenbildung

0,022 Gew.-% DBTL

Grundmaterial / Härter (Roh-MDI) = 100 Gew.-Teile / 60 Gew.-Teile

Roh-MDI ist technisch hergestelltes MDI mit einer mittleren Funktionalität von etwa 2,7.

Schichtdicke 5 mm

n.b.: nicht bestimmt, da die Systeme zu wenig thixotrop sind und deshalb so hohe Werte für die Ablaufstrecke (größer 30 cm, teilweise größer 50 cm) aufweisen, daß eine genaue Messung hier nicht mehr sinnvoll ist.

## Patentansprüche

1. Zweikomponentiges Polyurethansystem auf der Basis einer Polyol- und einer Isocyanatkomponente, dadurch gekennzeichnet, daß die Polyolkomponente eine Mischung von Polyamidamin und niedermolekularen mehrfunktionellen Aminen enthält, wobei es sich bei den niedermolekularen mehrfunktionellen Aminen um Verbindungen mit im Mittel etwa 2 Aminogruppen pro Molekül oder um bei Raumtemperatur flüssige Vertreter der homologen Reihe der Alkanolamine handelt.

**2.** Polyurethansystem nach Anspruch 1, dadurch gekennzeichnet, daß das Gewichtsverhältnis von Amin zu Polyamidamin von 10 : 1 bis 2 : 3 Gewichtsteile beträgt.

**3.** Polyurethansystem nach Anspruch 2, dadurch gekennzeichnet, daß das Gewichtsverhältnis 2 : 1 bis 4 : 1 Gewichtsteile beträgt.

**4.** Polyurethansystem nach einem der vorhergehenden Ansprüche, dadurch gekennzeichnt, daß der Anteil der Kombination mehrfunktionelles Amin und Polyamidamin an der Polyolkomponente 1 bis 10 Gew.%, vorzugsweise 2 bis 6 Gew.%, insbesondere 3 bis 5 Gew.%, beträgt.

**5.** Polyurethansystem nach mindestens einem der vorhergehenden Ansprüche, dadurch gekennzeichnet, daß es sich um ein mehrfunktionelles Amin im Mittel etwa 2 Aminogruppen pro Molekül handelt.

**6.** Polyurethansystem nach Anspruch 5, dadurch gekennzeichnet, daß das mehrfunktionelle Amin ein cycloaliphatisches Diamin oder ein Diamin auf Basis von Polyäther wie Polyoxypropylen-alpha-omega-diamin ist.

**7.** Polyurethansystem nach Anspruch 6, dadurch gekennzeichnet, daß das Amin Tetramethylethylendiamin ist.

**8.** Polyurethansystem nach Anspruch 5, dadurch gekennzeichnet, daß das Amin ein aromatisches Diamin ist.

**9.** Polyurethansystem nach Anspruch 8, dadurch gekennzeichnet, daß das Diamin 2,4-Diaminomesitylen, 1,3,5-Triethyl-2,4-diaminobenzol, 1,3,5,-Triisopropyl-2,4-diaminobenzol, 4,6-Dimethyl-2-ethyl-1,3-diaminobenzol, 3,5,3',5'-Tetraethyl-4,4'-diaminodiphenylmethan, 3,5,3',5'-Tetraisopropyl-4,4'-diaminodiphenylmethan, 3,5-Diethyl-3',5'-diisopropyl-4,4'-diaminodiphenylmethan, 1-t-Butyl-3,5-dimethyl-2,4-diaminobenzol, 1-t-Butyl-3,5-dimethyl-2,6-diaminobenzol ist.

**10.** Polyurethansystem nach Anspruch 8, dadurch gekennzeichnet, daß die Amine trialkylsubstituierte Diaminobenzole, ggfs. in ihren isomeren Mischungen sind, bei denen die Alkylgruppen bevorzugt eine Methyl- und zwei Ethylgruppen sind, insbesondere 1-Methyl-3,5-diethyl-2,4-diaminobenzol oder/und 1-Methyl-3,5-diethyl-2,2-diaminobenzol.

**11.** Polyurethansystem nach mindestens einem der vorhergehenden Ansprüche, dadurch gekennzeichnet, daß das Polyamidamin ein Polyamidamin auf der Basis von oligomerisierter Fettsaure insbesondere Trimerfettsäure ist.

**12.** Polyurethansystem nach mindestens einem der vorhergehenden Ansprüche 1 bis 10, dadurch gekennzeichnet, daß das eingesetzte Polyamidamin durch Umsetzung von Dicarbonsäuren, insbesondere trimerisierten Fettsäuren, mit Überschuß von mehrwertigen Aminen gebildet ist.

**13.** Polyurethansystem nach mindestens einem der vorhergehenden Ansprüche 1 bis 12, dadurch gekennzeichnet, daß das Polyamidamin ein weichgemachtes Polyamidaminharz auf der Basis von oligomerisierten Fettsäuren ist, und hergestellt wird durch Kondensation oder Amidierung von (a) Oligocarbonsäuren aus der Oligomerisation von ungesättigten Fettsäuren mit vorzugsweise mindestens 50 Gew.% Trimergehalt, bevorzugt einer Zusammensetzung von 0 - 2 % monomere Fettsäuren, 10 - 50 % dimere Fettsäuren und 50 - 90 % trimere Fettsäuren, mit (b) Überschuß eines heterocyklischen Amins der allgemeinen Formel

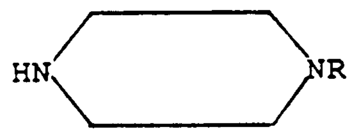

wobei R eine Alkylaminogruppe oder H, $-R'NH_2$ ist, wobei R' eine gesättigte aliphatische Kohlenwasserstoffkette, insbesondere eine $-C_2H_4-$ Gruppe ist.

**14.** Polyurethansysteme nach Anspruch 13, dadurch gekennzeichnet, daß das Polyamidamin ein mittleres Molekulargewicht von etwa 1200 besitzt, eine Viskosität bei 25 °C von etwa 3000 Pa•s aufweist und in mittlerer Zusammensetzung der allgemeinen Summenformel $C_{72}H_{150}N_9O_3$ entspricht.

**15.** Verfahren zur Herstellung des Polyurethansystems gemäß vorhergehenden Ansprüchen, dadurch gekennzeichnet, daß der Polyolkomponente des Polyurethansystems das mehrfunktionelle Amin und das Polyamidamin vor der Umsetzung mit der Isocyanatkomponenten zugegeben werden.

**16.** Verwendung des Polyurethansystems nach mindestens einem der Ansprüche 1 bis 14 als Klebstoffsystem für den Filterbau, zum Einsetzen von Scheiben in Fensterprofile, insbesondere zur Herstellung mehrfachverglaster Fenster, sowie zur Herstellung von Sandwich-Bauteilen.

## Claims

**1.** A two-component polyurethane system based on a polyol component and an isocyanate component, characterized in that the polyol component contains a mixture of polyamidoamine and low molecular weight polyfunctional amines, the low polyfunctional amines being compounds containing on average around 2 amino groups per molecule or representatives of the homologous series of the alkanolamines which are liquid at room temperature.

**2.** A polyurethane system as claimed in claim 1, characterized in that the ratio by weight of amine to polyamidoamine is approximately 10 : 1 to 2 : 3 parts by weight.

**3.** A polyurethane system as claimed in claim 2, characterized in that the ratio by weight is approximately 2 : 1 to 4 : 1 parts by weight.

**4.** A polyurethane system as claimed in any of the preceding claims, characterized in that the percentage content of the combination of polyfunctional amine and polyamidoamine in the polyol component is approximately 1 to 10% by weight, preferably 2 to 6% by weight and more preferably 3 to 5% by weight.

**5.** A polyurethane system as claimed in at least one of the preceding claims, characterized in that the polyfunctional amine contains on average approximately two amino groups per molecule.

**6.** A polyurethane system as claimed in claim 5, characterized in that the polyfunctional amine is a cycloaliphatic diamine or a diamine based on polyethers, such as polyoxypropylene $\alpha,\omega$-diamine.

**7.** A polyurethane system as claimed in claim 6, characterized in that the amine is tetramethyl ethylenediamine.

**8.** A polyurethane system as claimed in claim 5, characterized in that the amine is an aromatic diamine.

**9.** A polyurethane system as claimed in claim 8, characterized in that the diamine is 2,4-diaminomesitylene, 1,3,5-triethyl-2,4-diaminobenzene, 1,3,5-triisopropyl-2,4-diaminobenzene,4,6-dimethyl-2-ethyl-1,3-diaminobenzene, 3,5,3',5'-tetraethyl-4,4'-diaminodiphenyl methane, 3,5,3',5'-tetraisopropyl-4,4'-diaminodiphenylmethane, 3,5-diethyl-3',5'-diisopropyl-4,4'-diaminodiphenyl methane, 1-t-butyl-3,5-dimethyl-2,4-diaminobenzene, 1-t-butyl-3,5-dimethyl-2,6-diaminobenzene.

**10.** A polyurethane system as claimed in claim 8, characterized in that the amines are trialkyl-substituted diaminobenzenes, optionally in the form of isomer mixtures, in which the alkyl groups are preferably one methyl and two ethyl groups, more particularly 1-methyl-3,5-diethyl-2,4-diaminobenzene and/or 1-methyl-3,5-diethyl-2,2-diaminobenzene.

**11.** A polyurethane system as claimed in at least one of the preceding claims, characterized in that the polyamidoamine is a polyamidoamine based on oligomerized fatty acid, more particularly trimer fatty acid.

**12.** A polyurethane system as claimed in at least one of claims 1 to 10, characterized in that the polyamidoamine used is formed by reaction of dicarboxylic acids, more particularly trimerized fatty acids, with an excess of polyfunctional amines.

**13.** A polyurethane system as claimed in at least one of claims 1 to 12, characterized in that the polyamidoamine is a plasticized polyamidoamine resin based on oligomerized fatty acids and is obtained by condensation or amidation of (a) oligocarboxylic acids from the oligomerization of unsaturated fatty acids preferably having a trimer content of at least 50% by weight for a preferred composition of 0 to 2% monomeric fatty acids, 10 to 50% dimeric fatty acids and 50 to 90% trimeric fatty acids with (b) an excess of a heterocyclic amine corresponding to the following general formula

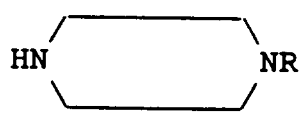

in which R is an alkylamino group or H, $-R'NH_2$, where R' is a saturated aliphatic hydrocarbon chain, preferably a $-C_2H_4$ group.

**14.** Polyurethane systems as claimed in claim 13, characterized in that the polyamidoamine has an average molecular weight of approximately 1,200, a viscosity at 25°C of approximately 3,000 Pa.s and an average composition corresponding to the general empirical formula $C_{72}H_{150}N_9O_3$.

**15.** A process for the production of the polyurethane system claimed in the preceding claims characterized in that the polyfunctional amine and the polyamidoamine are added to the polyol component of the polyurethane system before the reaction with the isocyanate components.

**16.** The use of the polyurethane system claimed in at least one of claims 1 to 14 as an adhesive system in the manufacture of filters, for fitting glass in window profiles, more particularly for the production of multiglazed windows, and for the production of sandwich elements.

**Revendications**

**1.** Système de polyuréthanne à deux composants, à base d'un composant polyol et d'un composant isocyanate, caractérisé en ce que le composant polyol renferme un mélange de polyamidamine et d'amines plurifonctionnelles à bas poids moléculaire, dans lequel il s'agit pour les amines plurifonctionnelles à bas poids moléculaire, de composés avec en moyenne environ 2 groupes amino par molécule ou de représentants liquides à température ambiante de la série homologue des alcanolamines.

**2.** Système de polyuréthanne selon la revendication 1, caractérisé en ce que le rapport pondéral de l'amine à la polyamidamine, s'élève de 10 : 1 à 2 : 3 parties en poids.

**3.** Système de polyuréthanne selon la revendication 2, caractérisé en ce que le rapport pondéral s'élève de 2 : 1 à 4 : 1 parties en poids.

**4.** Système de polyuréthanne selon l'une des revendications précédentes, caractérisé en ce que la fraction de la combinaison d'amine plurifonctionnelle et de polyamidamine dans le composant polyol, s'élève de 1 à 10 % en poids, de préférence de 2 à 6 % en poids et en particulier de 3 à 5 % en poids.

**5.** Système de polyuréthanne selon au moins une des revendications précédentes caractérisé en ce qu'il s'agit d'une amine plurifonctionnelle ayant en moyenne environ 2 groupes amino par molécule.

**6.** Système de polyuréthanne selon la revendication 5, caractérisé en ce que l'amine plurifonctionnelle est une diamine cycloaliphatique ou une diamine à base de polyéther comme la polyoxypropylène-alpha, oméga-diamine.

**7.** Système de polyuréthanne selon la revendication 6, caractérisé en ce que l'amine est la tétraméthylethylènediamine.

**8.** Système de polyuréthanne selon la revendication 5, caractérisé en ce que l'amine est une diamine aromatique;

**9.** Système de polyuréthanne selon la revendication 8, caractérisé en ce que la diamine est le 2,4-diaminomesitylène, le 1,3,5-triéthyl-2,4-diaminobenzène, le 1,3,5-triisopropyl-2,4-diaminobenzène, le 4,6-diméthyl-2-éthyl-1,3-diaminobenzène 3,5,3',5'-tétraéthyl-4,4-diaminodiphénylméthane, le 3,5,3',5'-tétraisopropyl-4,4'-diaminodiphénylméthane, le 3,5-diethyl-3',5'-diisopropyl-4,4'-diaminodiphénylméthane, le 1-terbutyl-3,5-diméthyl-2,4-diaminobenzène ou le 1-terbutyl-3,5-diméthyl-2,6-diaminobenzène.

**10.** Système de polyuréthanne selon la revendication 8, caractérisé en ce que les amines sont des diaminobenzènes trisubstitués par un alcoyle, le cas échéant sous forme de mélanges de leurs isomères, pour lesquels les groupes alcoyle sont de préférence un groupe méthyle et deux groupes éthyle, en particulier le 1-méthyl-3,5-diéthyl-2,4-diaminobenzène et/ou le 1-méthyl-3,5-diéthyl-2,4-diaminobenzène.

**11.** Système de polyuréthanne selon au moins une des revendications précédentes, caractérisé en ce que la polyamidamine est une polyamidamine à base d'acides gras oligomérisés, en particulier d'acide gras trimère.

**12.** Système de polyuréthanne selon au moins une des revendications précédentes 1 à 10, caractérisé en ce que la polyamidamine mise en oeuvre est formée par mise en réaction d'acides dicarboxyliques, en particulier d'acides gras trimèrisés avec un excès d'amines plurivalentes.

**13.** Système de polyuréthanne selon au moins une des revendications précédentes 1 à 12, caractérisé en ce que la polyamidamine est une résine de polyamidamine plastifiée à base d'acides gras oligomérisés et est produite par condensation ou amidification de :

a) des acides oligocarboxyliques résultant de l'oligomérisation d'acides gras non saturés avec de préférence au moins 50 % en poids de teneur en trimères, de préférence avec une composition de 0 - 2 % d'acides gras monomères, 10 - 50 % d'acides gras dimères et 50 à 90 % d'acides gras trimères, avec,

b) un excès d'une amine hétérocyclique de formule générale:

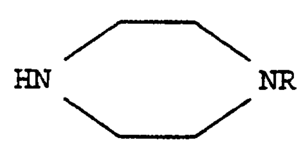

dans laquelle

R est un groupe alcoylamino ou H, $R'NH_2$, dans lequel R' est une chaîne hydrocarbonée aliphatique saturée, de préférence un groupe-$C_2H_4$.

**14.** Système de polyuréthanne selon la revendication 13, caractérisé en ce que la polyamidamine possède un poids moléculaire moyen d'environ 1200, manifeste une viscosité à 25 °C d'environ 3000 Pa.s et correspond à une composition moyenne de formule générale $C_{72}H_{150}N_9O_3$.

**15.** Procédé de production du système de polyuréthanne conformément aux revendications précédentes, caractérisé en ce qu'au composant polyol du système de polyuréthanne, on ajoute l'amine plurifonctionnelle et la polyamidamine avant la réaction avec le composant isocyanate.

**16.** Utilisation du système de polyuréthanne selon au moins une des revendications 1 à 14 en tant que système de substance adhésive, pour la construction de filtre, pour la mise en oeuvre de vitres dans les profilés de fenêtre en particulier pour la fabrication de fenêtres à vitrages multiples, ainsi que pour la production de pièces de construction en sandwich.